# EUROPÄISCHE PATENTSCHRIFT

(11) **EP 0 647 402 B1**
(45) Veröffentlichungstag und Bekanntmachung des Hinweises auf die Patenterteilung: **30.07.1997**
(21) Anmeldenummer: 94102609.8
(22) Anmeldetag: 22.02.1994
(51) Int. Cl.: A21C 1/02

(54) **Maschine zum Kneten von Teig**
Machine for kneading dough
Machine de pétrissage de pâte

(30) Priorität: 07.10.1993 DE 4334121
(43) Veröffentlichungstag der Anmeldung: 12.04.1995
(73) Patentinhaber: DIOSNA Dierks & Söhne GmbH, 49074 Osnabrück (DE)
(72) Erfinder: Möller, Dieter, D-49086 Osnabrück (DE); Thies, Konrad, D-48485 Neuenkirchen (DE); Schmidt, Willi, D-31303 Burgdorf (DE); Gerbel, Daniel, D-49074 Osnabrück (DE); Etzenbach, Joachim, D-49082 Osnabrück (DE)
(74) Vertreter: Busse & Busse Patentanwälte

(56) Entgegenhaltungen:
- DE-A- 1 757 361
- FR-A- 568 776
- GB-A- 648 420

## Beschreibung

Die Erfindung bezieht sich auf eine Maschine zum Kneten von Teig gemäß dem Oberbegriff des Anspruchs 1.

Bei einer bekannten Maschine dieser Art (DE-PS 17 57 361 B2) bestehen die Knetwerkzeuge aus zwei gleich ausgebildeten Bügeln, deren Längsschenkel schraubenlinienförmig verwunden sind. Durch die beiden ineinandergreifenden Bügel wird der Teig einem Knetvorgang unterworfen, bei dem dem Teig beim Durchlaufen der Knetzone ein Richtungswechsel aufgeprägt wird. Der Teig im Arbeitsbereich der Knetwerkzeuge erfährt eine Beschleunigung und wird infolge der gegenläufigen Faltenbildung gestreckt. Beim Verlassen des Arbeitsbereiches sammelt er sich in aneinandergeschlagenen Falten und wird gestaucht.

Der Erfindung liegt die Aufgabe zugrunde, eine Knetmaschine der im Oberbegriff des Patentanspruchs genannten Art im Wirkungsgrad des Misch- und Knetsystems zu verbessern.

Diese Aufgabe wird durch die im Anspruch 1 angegebenen Merkmale gelöst. In den Ansprüchen 2 bis 6 sind vorteilhafte Ausgestaltungen der Erfindung angegeben.

Durch baulich einfache Mittel wird eine Verbesserung des Wirkungsgrades der Knetmaschine erreicht. Der Unterschied im Durchmesser der beiden Arbeitsbereiche der beiden Knetbügel bedingt eine Differenz der Umfangsgeschwindigkeiten beider Werkzeuge, durch die der Teig beim Durchlaufen der Knetwerkzeuge unterschiedlichen Krafteinwirkungen ausgesetzt ist, die positive Auswirkungen auf den Teigbildungsprozeß zur Folge haben.

Weitere Einzelheiten und Vorteile der Erfindung ergeben sich aus der nachfolgenden Beschreibung und der Zeichnung, die ein Ausführungsbeispiel des Gegenstands der Erfindung schematisch veranschaulicht. In der Zeichnung zeigen:
- Fig. 1: eine Seitenansicht eines Ausführungsbeispiels des Knetbottichs einer Knetmaschine nach der Erfindung,
- Fig. 2: eine Draufsicht auf den Knetbottich nach Fig. 1,
- Fig. 3: eine vereinfachte schematische Momentaufnahme der Teigbewegung während des Knetvorgangs in einer Draufsicht auf den Teig.

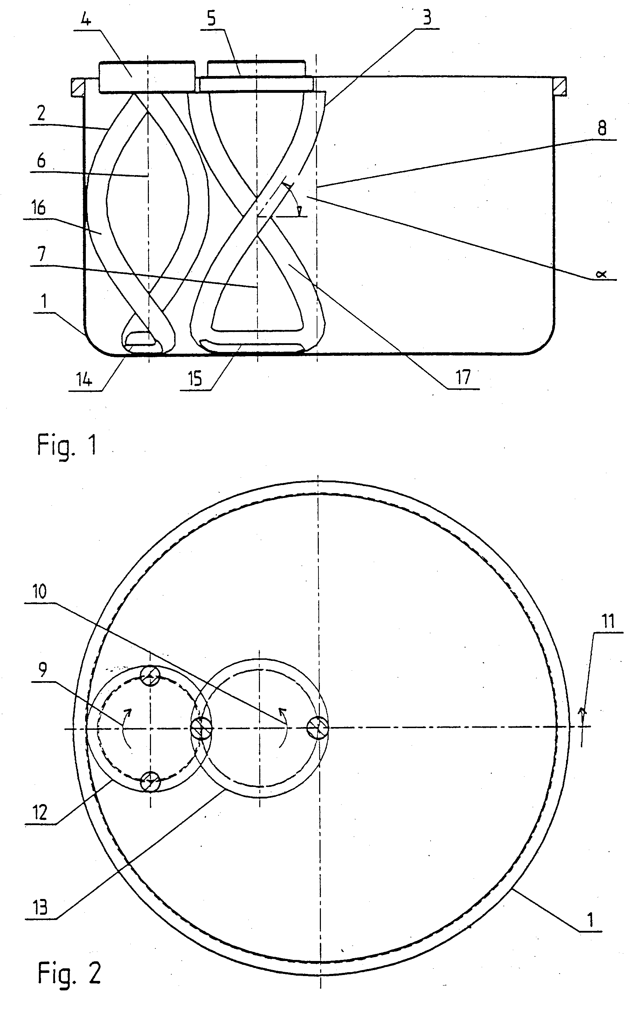

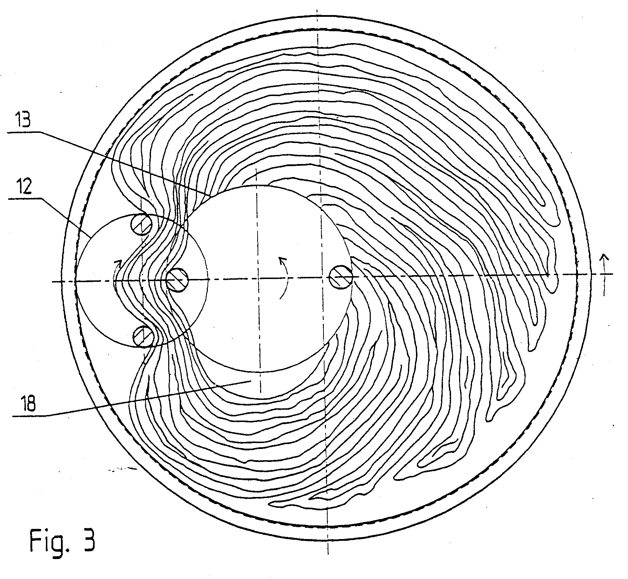

Die Knetmaschine umfaßt gemäß Fig. 1 einen hier mit 1 bezeichneten Knetbottich, der einen ebenen Boden und eine zylindrische Bottichwand aufweist. In den Bottich 1 erstrecken sich von oben her zwei Knetwerkzeuge 2,3, die mit ihren oberen Enden jeweils an einer Trägernabe 4,5 angreifen. Die Knetwerkzeuge 2,3 laufen um Achsen 6,7 um, die sich parallel zur Bottichachse 8 erstrecken. Die Umlaufrichtung der Knetwerkzeuge 2,3 ist gegenläufig, wie das die Pfeile 9,10 in den Fig. 2 und Fig. 3 veranschaulichen. Die Umlaufrichtung 9 des der Bottichwand nächstliegend angeordneten Knetwerkzeugs 2 ist zur Umlaufrichtung 11 des Bottichs 1 entgegengesetzt.

Wie aus Fig. 2 ersichtlich liegen die Umlaufachsen 6,7 der Knetwerkzeuge 2,3 mit der Bottichachse 8 in einer gemeinsamen Ebene und exzentrisch zum Bottich 1. Die Knetwerkzeuge 2,3 sind untereinander so versetzt angeordnet, daß das eine Werkzeug dem anderen gegenüber um 90° vorauseilt bzw. nacheilt. Die Umlaufachsen 6,7 der Knetwerkzeuge 2,3 und die Umlaufachse 8 des Bottichs 1 sind so angeordnet, daß die durch die Kreise 12 und 13 in den Fig. 2 und 3 veranschaulichten Arbeitsbereiche der Knetwerkzeuge 2,3 sich gegenseitig überdecken und der Arbeitsbereich 13 des der Bottichmitte zugewandten Knetwerkzeugs 3 die Bottichachse 8 überstreicht. Der Grad der gegenseitigen Überdeckung und die radiale Gesamterstreckung der Arbeitsbereiche 12 und 13 kann in weitem Bereich variieren und bestimmt sich im Einzelfall unter Optimierungsgesichtspunkten auf der Grundlage der gewählten Gestaltungs- und Betriebsparameter.

Die Durchmesser der beiden Arbeitsbereiche 12,13 der Knetwerkzeuge 2,3 sind unterschiedlich groß, wobei bei dem dargestellten bevorzugten Ausführungsbeispiel der Arbeitsbereich 13 des der Bottichachse 8 zugewandten Knetwerkzeuges 3 größer ausgebildet ist als der Arbeitsbereich 12 des der Bottichwand zugewandten Knetwerkzeuges 2. Dabei ist der Arbeitskreisdurchmesser 13 des größeren Knetwerkzeugs 3 um etwa 10 % größer als der Durchmesser des kleineren Knetwerkzeugs 2. Die Größe des Überdeckungsbereiches der beiden Arbeitsbereiche 12,13 ergibt sich aus dem gewählten Achsabstand A zwischen den Knetwerkzeugachsen 6,7. Dieser ist bei dem dargestellten Beispiel um etwa 15 bis 25 % kleiner als der Arbeitskreisdurchmesser D des größeren Knetwerkzeugs 3. Bevorzugte Werte liegen bei 16 bis 20 %. Anstelle der bevorzugten Ausbildung des der Bottichachse 8 zugewandten Knetwerkzeugs 3 als durchmessergrößeres Werkzeug kann grundsätzlich auch das bottichwandnahe Knetwerkzeug 2 mit größerem Durchmesser versehen sein. Die Durchmesserdifferenz kann in einem Bereich von etwa 5-15 % liegen.

Jedes Knetwerkzeug 2,3 kann aus einem einstückig zu einem Bügel gebogenen Stab bestehen oder aus mehreren verschweißten Teilen zusammengesetzt sein. Auch eine gegossene Werkzeugausbildung ist möglich. Es hat einen sich parallel und dicht oberhalb des Bodens des Bottichs 1 erstreckenden geraden Querschenkel 14,15. Von dessen Ende ausgehend erstreckt sich zur Trägernabe 4,5 ein Paar Längsschenkel 16,17, welche an der Trägernabe 4,5 festgelegt sind. Vom Querschenkel 14,15 bis zur Trägernabe 4,5 sind die Längsschenkel 16,17 wendelförmig verwunden, wobei die Verwindungsrichtung relativ zur jeweiligen Drehrichtung 9,10 des von ihnen gebildeten Bügels 2,3 gleichsinnig verläuft. Der sich durch die Verwindung ergebende Steigungswinkel α beträgt bei diesem Ausführungsbeispiel knapp 53°.

Zur Durchführung des Knetvorganges werden in den Bottich 1 die jeweils erforderlichen Zutaten wie Mehl, Wasser etc. hineingegeben und die Knetmaschine in Betrieb gesetzt. Durch den Umlauf des Bottichs 1 in Verbindung mit den Umlaufbewegungen der Knetwerkzeuge 2,3 tritt zunächst ein Vermischen der Zutaten unter Bildung eines Teiges ein, der dann im weiteren fertiggeknetet wird.

Der Knetvorgang sei anhand von Fig. 3 veranschaulicht. Der vergrößerte Arbeitsbereich 13 des der Bottichmitte zugewandten Knetwerkzeugs 3 bewirkt in Verbindung mit der höheren Umlaufgeschwindigkeit ein erheblich schnelleres Vermischen aller Bestandteile. Versuche haben gezeigt, daß die Mischphase bis zu einem Drittel reduziert werden kann. Da für die Strukturbildung von insbesondere Weizenteigen und Roggenteigen eine schnelle Mischung bedeutsam ist, sind die Voraussetzungen für die Bildung eines qualitativ besonders hochwertigen Teiges geschaffen. Außerdem ergibt sich durch den größeren Arbeitsbereich 13 in der sich anschließenden Knetphase, daß mehr Teig zwischen den beiden Knetwerkzeugen 2,3 gefördert wird. Dies beschleunigt den Teigbildungsprozeß. Desweiteren werden aufgrund des größeren Arbeitsbereiches insbesondere des Werkzeugs 3 und des gleichzeitigen Überstreichens der Bottichachse 8 auch kleinere Teigchargen länger im Knetprozeß gehalten und dadurch intensiver bearbeitet, so daß die Untergrenze für sinnvoll bearbeitbare Teigchargen erheblich gesenkt werden kann.

Durch die Vergrößerung des Arbeitsbereiches 13 ergibt sich bei unverändertem Achsabstand ein größerer Überlappungsbereich zwischen den beiden Arbeitsbereichen 12,13, der in der Mischphase zu einer sehr homogenen vermischung aller Teigkomponenten führt. Zudem wird hierdurch eine Verlängerung der Umlenkwege erreicht, was in der Knetphase eine zusätzliche Dehnung des Teigs zur Folge hat mit positiven Auswirkungen auf dessen Strukturbildung.

Durch die sich aus den unterschiedlichen Umfangsgeschwindigkeiten ergebenden Scherkräfte wird der aus dem Arbeitsbereich 12,13 der Knetwerkzeuge 2,3 austretende Teigstrang vom Knetwerkzeug 3, das der Bottichmitte zugewandt ist, abgelenkt und zur Bottichwandung hingefördert, wodurch die Stauchung des Teiges verstärkt und somit der Teigbildungsprozeß gefördert wird. Hierdurch entsteht außerdem ein Freiraum 18 hinter dem der Bottichmitte zugewandten Knetwerkzeug 3, durch den einem Kleben des Teiges am Werkzeug 3 und einem daraus resultierenden Teigklettern entgegengewirkt wird.

Die höhere Geschwindigkeit des der Bottichmitte zugewandten Knetwerkzeugs 3 bewirkt darüber hinaus eine Erhöhung der Trennkräfte zwischen dem Teig und der Werkzeugoberfläche, die ihrerseits einem Teigklettern entgegenwirkt.

Die geringe Steigung der Längsschenkel 16,17 der Knetwerkzeuge 2,3 hat eine größere Vertikalkomponente zur Folge, die ihrerseits zu einer besseren Vermischung aller Teigkomponenten beiträgt sowie in der anschließenden Knetphase auf den Teig eine zusätzliche Dehnung nach unten mit anschließender Stauchung ausgeübt. Die zum Bottichboden gerichtete Förderrichtung verringert ebenfalls die Neigung des Teiges zum Klettern.

## Patentansprüche

1. Maschine zum Kneten von Teig, bestehend aus einem rotierend angetriebenen Bottich (1) mit ebenem Boden und zylindrischer Bottichwand und aus zwei von oben exzentrisch in den Bottich (1) eingreifenden Knetwerkzeugen (2,3), die gegenläufig synchron um zur Bottichachse (8) parallele und mit dieser etwa in einer gemeinsamen Ebene liegende Achsen (6,7) angetrieben umlaufen, und die aus zwei Bügeln bestehen, die zwei zu ihrer Umlaufachse (6,7) symmetrisch angeordnete, jeweils an ihren dem Bottichboden zugewandten Enden durch einen Querschenkel (14,15) verbundene und an ihren oberen Enden an einer Trägernabe (4,5) befestigte, zylindrische, einander bereichsweise überschneidende Arbeitsbereiche (12,13) durchlaufende Längsschenkel (16,17) aufweisen, wobei die Längsschenkel (16,17) relativ zur Drehrichtung (9,10) des von ihnen gebildeten Bügels schraubenlinienförmig verwunden sind, die Querschenkel (14,15) der Bügel einen Drehwinkelversatz zueinander besitzen, der der Bottichmitte zugewandte Bügel die Bottichachse (8) überstreicht und der der Bottichwandung zugewandte Bügel (2) mit seinem Arbeitsbereich an die Bottichwandung angrenzt sowie eine zur Drehrichtung (11) des Bottichs (1) entgegengesetzte Drehrichtung besitzt, **dadurch gekennzeichnet**, daß der Durchmesser der Arbeitsbereiche (12,13) der beiden Knetwerkzeuge (2,3) unterschiedlich groß ist.

2. Maschine zum Kneten von Teig nach Anspruch 1, **dadurch gekennzeichnet**, daß das der Bottichmitte zugewandte Knetwerkzeug (3) einen größeren Arbeitskreisdurchmesser hat als das der Bottichwand benachbarte Knetwerkzeug (2).

3. Maschine nach Anspruch 1 oder 2, **dadurch gekennzeichnet**, daß das im Durchmesser größere Knetwerkzeug einen etwa 5 % bis 15 % größeren Arbeitskreisdurchmesser aufweist als das kleinere Knetwerkzeug.

4. Maschine nach einem der Ansprüche 1 bis 3, **dadurch gekennzeichnet**, daß der Durchmesserunterschied etwa 10 % bezogen auf den Durchmesser des kleineren Knetwerkzeug beträgt.

5. Maschine nach einem der Ansprüche 1 bis 4, **dadurch gekennzeichnet**, daß der Achsabstand zwischen den Werkzeugachsen (6,7) um etwa 15 bis 25 %, vorzugsweise etwa 16 bis 20 %, kleiner ist als der Arbeitskreisdurchmesser des größeren Knetwerkzeugs (3).

6. Maschine nach einem der Ansprüche 1 bis 5, **dadurch gekennzeichnet**, daß der Steigungswinkel der Längsschenkel (16,17) der Knetwerkzeuge (2,3) 53 % unterschreitet.

## Claims

1. A machine for kneading dough, consisting of a rotatingly driven tank (1) with a flat bottom and a cylindrical wall and two kneading tools (2, 3) engaging into the tank (1) eccentrically from above and which rotate being driven in opposite directions and in synchronism about axes (6, 7) disposed parallel and substantially in a common plane therewith and which consist of two curved members which comprise, disposed symmetrically of their axis of rotation (6, 7) and which are respectively connected at their ends facing the bottom of the tank by a transverse arm(14, 15) while having at their upper ends, fixed to a carrier hub (4, 5) longitudinal arms (16, 17) which pass through working areas (12, 13) portions of which overlap one another and which are cylindrical being fixed at their top ends to a carrier hub (4, 5), whereby the longitudinal arms (16, 17) are twisted in helical form in relation to the direction of rotation (9, 10) of the curved member which they form, the transverse arms (14, 15) of the curved members being offset in their angle of rotation in respect of one another, the curved member which faces the middle of the tank wiping over the tank axis (8) while the curved member (2) facing the walls of the tank has its working area adjacent the tank walls and also a direction of rotation opposite to that of the direction of rotation (11) of the tank (1), characterised in that the diameter of the working areas (12, 13) of the two kneading tools (2, 3) are of different sizes.

2. A machine for kneading dough according to claim 1, characterised in that the kneading tool (3) which faces the middle of the tank has a greater diameter of working circle than the kneading tool (2) which is adjacent the tank wall.

3. A machine according to claim 1 or 2, characterised in that the larger diameter kneading tool has a working circle diameter about 5% to 15% greater than that of the smaller kneading tool.

4. A machine according to one of claims 1 to 3, characterised in that the difference in diameters amounts to about 10% related to the diameter of the smaller kneading tool.

5. A machine according to one of claims 1 to 4, characterised in that the axial distance between the tool axes (6, 7) is about 15 to 25% and preferably about 16 to 20% smaller than the working circle diameter of the larger kneading tool (3).

6. A machine according to one of claims 1 to 5, characterised in that the angle of rise of the longitudinal aims (16, 17) of the kneading tools (2, 3) is less than 53%.

## Revendications

1. Machine de pétrissage de pâte dans laquelle,
- une cuve (1) entraînée en rotation a un fond plat et une paroi latérale cylindrique,
- deux outils de pétrissage (2, 3) sont engagés d'en haut et dans des positions excentrées, à l'intérieur de la cuve (1) et tournent en sens contraire et en synchronisme autour d'axes (6, 7) parallèles à l'axe de cuve (8) avec lequel ils définissent un plan commun, ces outils étant constitués de deux étriers symétriques autour de leurs axes respectifs (6, 7),
- chaque étrier comporte deux branches longitudinales (16, 17), dont 'les extrémités situées près du fond de cuve sont reliées par une branche transversale (14, 15) tandis que les extrémités supérieures sont fixées à un moyeu porteur (4, 5),
- des zones de travail (12, 13) se recoupant partiellement sont balayées par les branches longitudinales (16, 17) qui, par rapport au sens de rotation de l'étrier qu'elles forment, présentent un tracé hélicoïdal,
- les branches transversales (14, 15) des étriers présentent entre elles un décalage angulaire, l'étrier (3) proche du centre de la cuve balayant l'axe (8) de celle-ci tandis que l'autre étrier (2) proche de la paroi de cuve passe tout près de celle-ci et tourne dans le sens contraire de celui (11) de cette cuve (1),
caractérisée en ce que
les diamètres des zones de travail (12, 13) des deux outils de pétrissage (2, 3) sont inégaux.

2. Machine de pétrissage de pâte selon la revendication 1,
caractérisée en ce que
l'outil (3) proche du milieu de la cuve a une zone de travail dont le diamètre est plus grand que celui de la zone de travail de l'outil (2) situé près de la paroi de la cuve.

3. Machine de pétrissage de pâte selon la revendication 1 ou 2,
caractérisée en ce que
le diamètre correspondant à l'outil le plus grand dépasse de 5 à 15 % celui correspondant à l'outil de plus petit.

4. Machine de pétrissage de pâte selon la revendication 1 à 3,
caractérisée en ce que
la différence des diamètres est de l'ordre de 10 % du diamètre du cercle de travail de l'outil le plus petit.

5. Machine de pétrissage de pâte selon la revendication 1 à 4,
caractérisée en ce que
la distance séparant les axes (6, 7) des outils est d'environ 15 à 25 %, de préférence 16 à 20 % inférieure au diamètre du cercle de travail de l'outil le plus grand (3).

6. Machine de pétrissage de pâte selon la revendication 1 à 5,
caractérisée en ce que
l'angle d'inclinaison des branches longitudinales (16, 17) des outils de pétrissage (2, 3) ne dépasse pas 53°.
